# EUROPEAN PATENT SPECIFICATION

(11) **EP 0 388 057 B1**
(45) Date of publication and mention of the grant of the patent: **26.01.1994**
(21) Application number: 90302309.1
(22) Date of filing: 05.03.1990
(51) Int. Cl.: F16D 65/56

(54) **Automatic adjuster for drum brake**
Automatische Nachstellvorrichtung für Trommelbremse
Dispositif d'ajustement automatique pour frein à tambour

(30) Priority: 11.03.1989 GB 8905618
(43) Date of publication of application: 19.09.1990
(60) Divisional application: 92121695.8
(73) Proprietor: AUTOMOTIVE PRODUCTS PLC, Leamington Spa Warwickshire CV31 3ER (GB)
(72) Inventor: Hadley, Clive Samuel, Solihull, West Midlands B93 0ER (GB); Haines, William Ernest, Southam, Warwickshire CV33 0EU (GB); King, William Arthur, Leamington Spa, Warwickshire CV32 7LD (GB); Lloyd, Alexander John, Leamington Spa, Warwickshire CV31 2NB (GB); Quiney, Kenneth Maurice, Birmingham, West Midlands B13 0DA (GB)
(74) Representative: Watts, Peter Graham

(56) References cited:
- DE-A- 2 301 006
- FR-A- 2 587 428
- GB-A- 1 287 884
- US-A- 2 570 398

## Description

The present invention relates to an automatic adjuster for a drum brake.

This invention is particularly concerned with drum brakes in which a strut is interposed between the brake shoes to limit return movement of the brake shoes upon release of the brakes. Automatic adjustment means may be incorporated in the strut to adjust the length of the strut to take account of wear of the friction linings of the brake shoes and maintain the clearance between the friction linings and the brake drums within a predetermined range.

One method of adjusting the length of the strut is to include a screw mechanism which is operated by a pawl and ratchet mechanism, in response to relative movement of the brake shoes upon hydraulic brake actuation. Hitherto, the pawl mechanism of such adjusters has been pivotally mounted between one of the shoes and the strut, so that the pawl can follow movement of the shoe relative to strut which would be located with respect to the other shoe. These pawl mechanisms require one or more spring elements to maintain them in engagement with the shoe and ratchet wheel. Such mechanisms must be located in the confined space between the brake shoes and the wheel hub which imposes limitations on their design which will adversely affect their operation. Furthermore, such pawl mechanisms can easily become clogged with debris resulting from wear of the friction linings.

British Patent 1,287,884 discloses an adjustment mechanism in which the strut includes a screw adjuster in which two parts of the strut move apart upon hydraulic operation of the brake. A leaf spring is attached between the two parts of the strut so that it is bowed when the strut is under tension. The spring has a pawl formation which engages a ratchet wheel, so that when the brake shoes move apart upon hydraulic brake actuation, the spring will force the two parts of the strut apart and in so doing will flatten causing the pawl formation to rotate the ratchet wheel which in turn rotates the screw adjuster to lengthen the strut. This arrangement overcomes many of the problems encountered hitherto. However, for accurate operation, the leaf spring must be located positively with respect to the two parts of the strut, so that it is secured with respect thereto, axially, rotationally and radially. While in the adjuster disclosed in British Patent 1,287,884, axial location of the leaf spring is adequate, rotational and radial location are poor.

The present invention provides a modification to the type of adjuster disclosed in British Patent 1,287,884, by means of which the leaf spring is located positively, axially, radially and rotationally relative to the components of the strut.

According to the present invention an automatic adjuster for an internal shoe drum brake comprises; a strut adapted to non-rotatably engage one brake shoe at one end and a second brake shoe at the other end; said strut comprising three coaxial members, a first end member being interconnected with an intermediate member by means of inter-engaging thread formations and a second end member being slidingly interconnected to the intermediate member and free to rotate relatively thereto; a sleeve member is mounted for rotation on the intermediate member and is located axially with respect thereto; a ratchet wheel is provided on the intermediate member between said second member and sleeve member for rotation therewith; a leaf spring acts between said second end member and sleeve member, said spring having a pawl formation which engages the ratchet wheel and upon movement apart of the second end member and intermediate member will cause the ratchet wheel to rotate; characterised in that formations are provided on the second end member and sleeve member, the spring engaging at each end, an undercut transverse face of one of the lugs to provide radial and axial location of the spring and axially extending faces of the lugs to provide rotational location.

The adjustment mechanism disclosed above is simple, compact and does not include pivotted members which are liable to be clogged by debris from the friction linings.

The automatic adjuster further comprises a temperature sensitive element being provided on one of said second end member or sleeve member, a formation being provided on said temperature sensitive element to engage a corresponding formation on said other of the second end member of sleeve member when the temperature of the brake rises above a predetermined value, inter-engagement of the corresponding formations preventing relative movement of the second end member and intermediate member.

The temperature sensitive element of the brake adjuster described above will prevent over-adjustment of the strut when the clearance between the friction linings and brake drum increases due to expansion of the drum.

Various embodiments of the invention are now described, by way of example only, with reference to the accompanying drawings, in which:-
Figure 1 is a plan view of a drum brake formed in accordance with the present invention;
Figure 2 is a section along the line II-II of Figure 1;
Figure 3 is a plan view of the spring element used in the brake illustrated in Figure 1;
Figure 4 is a view similar to Figure 3 of an alternative form of drum brake;
Figure 5 shows a modification to the automatic adjuster of the brake illustrated in Figure 1;
Figure 6 is a perspective view of a modified detent member for the brake adjuster illustrated in Figure 5;
Figure 7 is an alternative modified version of the automatic adjuster used in the brake illustrated in Figure 1;
Figure 8 illustrates the sleeve member of the automatic adjuster illustrated in Figure 7 before the temperature sensitive element is attached thereto;
Figure 9 is a view similar to Figure 2 of a further modification to the adjuster illustrated in Figure 1;
Figure 10 is a plan view of the adjuster illustrated in Figure 9;
Figure 11 is a plan view of an alternative form of adjuster in accordance with the present invention;
Figure 12 is a sectional side elevation of the adjuster illustrated in Figure 11.
Figure 13 illustrates in side elevation a modification to the adjuster illustrated in Figures 11 and 12; and
Figure 14 illustrates in part section a modification to the leaf spring element used in the above embodiments of the invention.

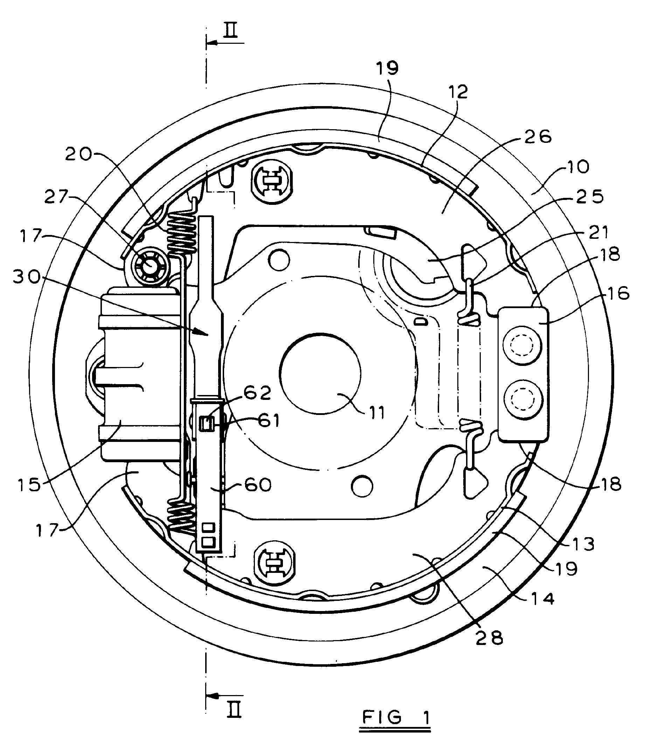

As illustrated in Figure 1, a drum brake comprises a drum 10 mounted for rotation with a hub 11. A pair of brake shoes 12 and 13 are mounted on a backing plate 14 between a double acting hydraulic cylinder 15 and an abutment 16. One end 17 of each shoe 12, 13 engages a piston of the hydraulic cylinder 15 and the other end 18 engages the abutment 16, so that upon actuation of the hydraulic cylinder the brake shoes 12 and 13 will be forced apart pivotting on the abutment 16, so that friction linings 19 on the brake shoes 12, 13 will be forced into frictional engagement with the brake drum 10. A pair of pull-off springs 20, 21 act between the brake shoes 12 and 13 urging them together, so that when the hydraulic cylinder 15 is released, the brake shoes 12, 13 will move away from the brake drum 10.

A handbrake lever 25 is pivotted to web portion 26 of brake shoe 12 by means of a pivot 27. A strut 30 engages the web portions 26 and 28 of brake shoes 12 and 13 to limit movement of one brake shoe 12 towards the other 13 and thus the clearance between the friction linings 19 and brake drum 10. Handbrake lever 25 also engages the strut 30 so that pivotting of the handbrake lever 25 clockwise as illustrated in Figure 1, about its pivot 27 will cause the brake shoes 12 and 13 to move apart so that the friction linings 19 engage the drum 10.

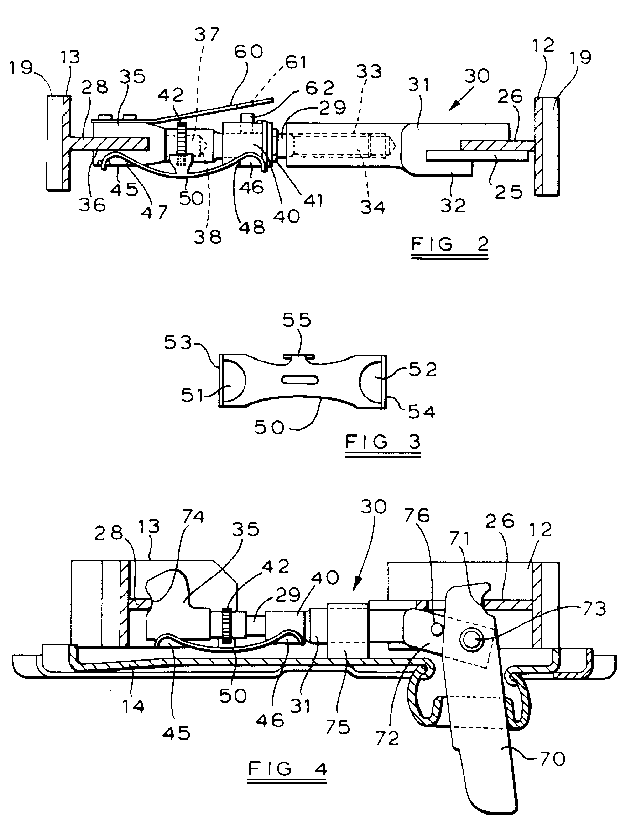

As illustrated in greater detail in Figure 2, the strut 30 comprises three members, a first end member 31 having a forked end 32 which is adapted to engage the web portion 26 of brake shoe 12 and handbrake lever 25, to non-rotatably locate that end of the strut 30 with respect to the shoe 12. Member 31 is interconnected to an intermediate member 29 by means of inter-engaging screw threaded formations 33 and 34.

A second end member 35 has a forked end portion 36 which engages the web portion 28 of shoe 13 to non-rotatably locate that end of the strut 30 with respect to the shoe 13. The end member 35 has spigot portion 37 which slidably and rotatably engages in a socket 38 in the adjacent end of intermediate member 29. A sleeve member 40 is mounted on intermediate member 29 for rotation relative thereto, the sleeve member 40 being located axially of the intermediate member 29 by means of circlip 41. A ratchet wheel formation 42 is provided on the intermediate member 29 for rotation therewith, between the end thereof engaging end member 35 and the sleeve 40.

The end member 35 and sleeve 40 are provided with lugs 45 and 46, the opposed transverse faces 47 and 48 thereof being undercut. A leaf spring element 50 is located under compression between the lugs 45 and 46, so that it bows away from the strut 30. As illustrated in greater detail in Figure 3, apertures 51 and 52 are provided adjacent each end 53 and 54 of the spring element 50 and the ends 53 and 54 are bent so that the portions thereof defining the outer ends of each aperture 51 and 52 extend substantially normal to the plane of the spring element 50. Centrally of the spring element 50, a pawl formation 55 extends substantially normal to the plane of the spring element 50 but in the opposite direction to the end portions 53 and 54. The spring element 50 is located between the end member 35 and sleeve 40, the apertures 51 and 52 engaging over the lugs 45 and 46 respectively, so that the inner edges of apertures 51 and 52 engage the undercut faces 47 and 48, the bent end portions 53 and 54 engaging outer faces of the lugs 45 and 46 respectively. The spring 50 is thereby located axially, radially and rotationally with respect to the end member 35 and sleeve 40. The pawl formation 55 extends towards the strut 30 and into engagement with the ratchet wheel formation 42.

A bimetallic element 60 is secured to end member 35 so that it extends axially of the strut 30 over the sleeve 40. An aperture 61 is provided in the free end of bimetallic element 60 and this is aligned with a corresponding projection 62 on sleeve 40. Under normal operating conditions, the bimetallic element 60 is inclined away from the strut 30 so that it is clear of the projection 62 on sleeve 40. However, when the temperature of the brake rises above a predetermined value, the bimetallic element 60 will bend towards the strut 30 so that the projection 62 engages in the aperture 61. Heat from the brake shoe 13 is readily transferred via end member 35 to the bimetallic element 60.

Under normal hydraulic operation of the brake, the cylinder 15 will force the ends of brake shoes 12 and 13 apart so that the friction linings 19 engage the drum 10. Relative movement of the shoes 12 and 13 will allow the end member 35 of strut 30 to move away from intermediate member 29 under the influence of the spring 50. This movement will cause the spring 50 to flatten so that the pawl formation 55 moves relative to ratchet wheel formation 42 causing the ratchet wheel formation 42 to rotate. Rotation of the ratchet wheel formation 42 will rotate the intermediate member 29 so that the threaded portion 34 thereof is unscrewed relative to threaded portion 33 of end member 31. The effective length of the strut 30 is thereby increased to accommodate wear of the friction linings 19 and maintain the clearance between the friction linings 19 and drum 10 within a predetermined range, when the brake is released. Upon the release of the brake, and shoes will move together under the influence of pull-off springs 20 and 21 until end member 35 again abuts the end of intermediate member 29. This return movement will cause the spring 50 to bow outwardly and the pawl formation 55 to ride up the inclined face of one of the teeth of the ratchet wheel formation 42. The degree of adjustment will depend upon the amount of movement of the brake shoes 12 and 13, the pitch of the teeth on the ratchet wheel formation 42 and the pitch of the threaded formations 33 and 34. The pitch of the teeth on the ratchet wheel formation 42 and the pitch of threads 33 and 34 are selected such that incremental adjustment will occur maintaining the clearance between the friction elements 19 and brake drum 10 within the required range which lies between the minimum running clearance required and the maximum travel permitted by the handbrake mechanism.

If the temperature of the brake rises above a predetermined value, above which automatic adjustment of the strut 30 may cause over-adjustment due to expansion of the brake drum 10, the bimetallic element 60 will engage the projection 62 thus preventing end member 35 from moving away from the intermediate member 29, thereby preventing rotation of the ratchet wheel formation 42 by the pawl formation 55. Relative movement between the shoes 12 and 13 and the strut 30 is permitted by movement of the web portions 26 and 28 in the forked end portions 32 and 36 respectively.

In the modified drum brake illustrated in Figure 4, the handbrake lever 70 is mounted normal to the web portion 26 of brake shoe 12, and passes through the backing plate 14. A notched portion 71 of the handbrake lever 70 engages the web portion 26. A formation 72 on the end of end member 31 of strut 30 is pivotally attached to lever 70 by means of pivot 73, while end member 35 has a formation 74 which engages the web portion 28 of brake shoe 13. The strut 30 is supported against the backing plate 14 by means of a slide block 75 which is located on end member 31. A roll pin 76 is provided through formation 72 of end member 31 to engage the handbrake lever 70, when in its released position, at a point between the pivot 73 and notched portion 71 which abuts the web 26 of shoe 12, so that when the brake is released, the strut 30 will act through handbrake lever 70 to limit relative movement of the shoes 12 and 13 towards one another.

Under hydraulic operation, the brake illustrated in Figure 4 will operate in the same manner as that illustrated in Figures 1 to 3. For handbrake operation, the handbrake lever 70 is pivotted clockwise as illustrated in Figure 4, so that the notched portion 71 will pivot on web 26 of brake shoe 12 and movement of the pivot 73 will cause the brake shoes 12 and 13 to move apart.

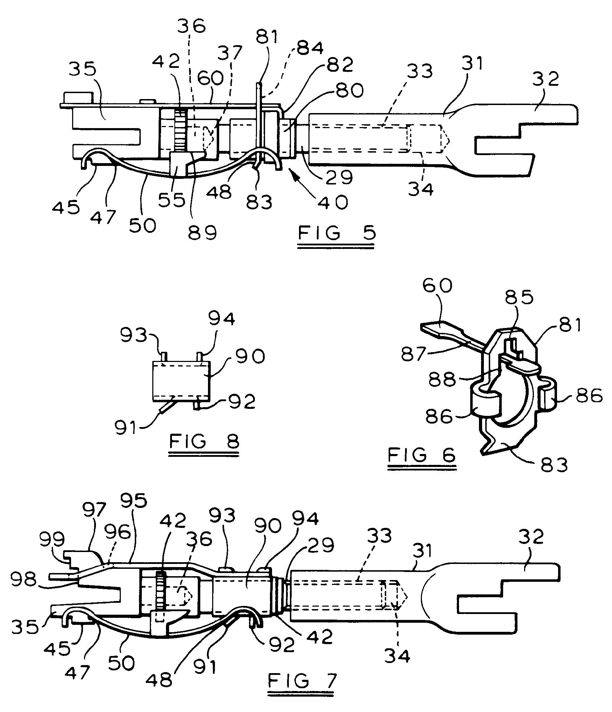

In the modification illustrated in Figures 5 and 6, the sleeve 40 is of stepped cylindrical formation having an enlarged intermediate diameter portion 80. A detent plate 81 is located on the sleeve 40, a tab portion being pressed out of the detent plate 81 and engaging over the enlarged diameter portion 80 of sleeve 40 to locate the detent plate 81 with respect thereto. The lower edge 83 of detent plate 80 is bent away from portion 80 of sleeve 40 to form the undercut face 48 which is engaged by spring 50. The aperture 84 left by tab 82 has a reduced width outer portion 85 similar to that illustrated in Figure 6 and the bimetallic strip element 60 has a correspondingly necked portion 87. The bimetallic strip element 60 is arranged to deflect away from the strut 30 as the temperature increases so that when the operating temperature of the brake is above a predetermined value, the necked portion 87 of bimetallic element 60 will engage in the reduced width portion 85 of aperture 84 to prevent relative axial movement of the end member 35 and intermediate member 29, while under normal operating conditions, the bimetallic element 60 will be located through the wider inner portion 88 of aperture 84 so that it is able to move relative thereto to permit the end member 35 and intermediate member 29 to move apart.

Also in this embodiment, the edge 89 of the pawl formation 55 which engages ratchet wheel formation 42, is extended axially towards the sleeve 40, so that upon relative movement of the end member 35 and intermediate member 29, the pawl formation 55 will remain in engagement with the ratchet wheel formation 42.

In the modification illustrated in Figure 6, the detent plate 81 is formed with lugs 86 on either side to engage portion 80 of the sleeve 40.

In the modification illustrated in Figures 7 and 8, the sleeve 40 is formed as a tubular member 90. Tabs 91 and 92 are pressed out of the tubular member 90, tab 91 being inclined and providing the undercut face 48 for engaging the inner edge of aperture 52 of spring 50 while lug 92 provides location for the outer edge of aperture 52. Two further tabs 93 and 94 are pressed out of the tubular member 90. These tabs 93 and 94 engage through apertures at one end of a bimetallic element 95 and are folded over to locate the bimetallic element 95.

The bimetallic element 95 has an aperture 96 adjacent its free end which engages over a stepped formation 97 on the end member 35. The bimetallic element 95 is located such that under normal operating temperatures, the aperture is located over a reduced length portion 98 of formation 97 so that relative axial movement of end member 35 and intermediate member 29 is permitted, while at operating temperatures above the predetermined value, the aperture 96 is located over an axially elongated portion 98 of formation 97 thereby preventing axial separation of the end member 35 and intermediate member 29.

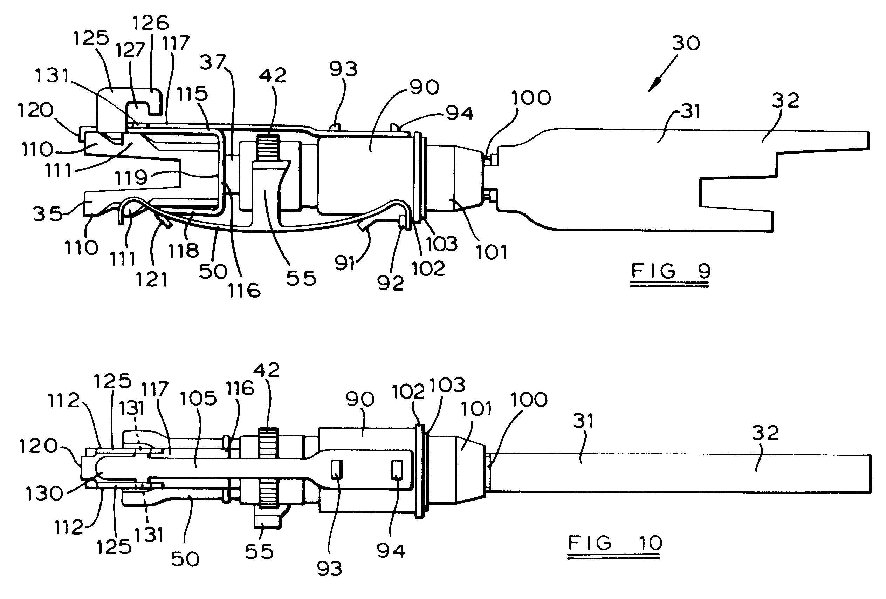

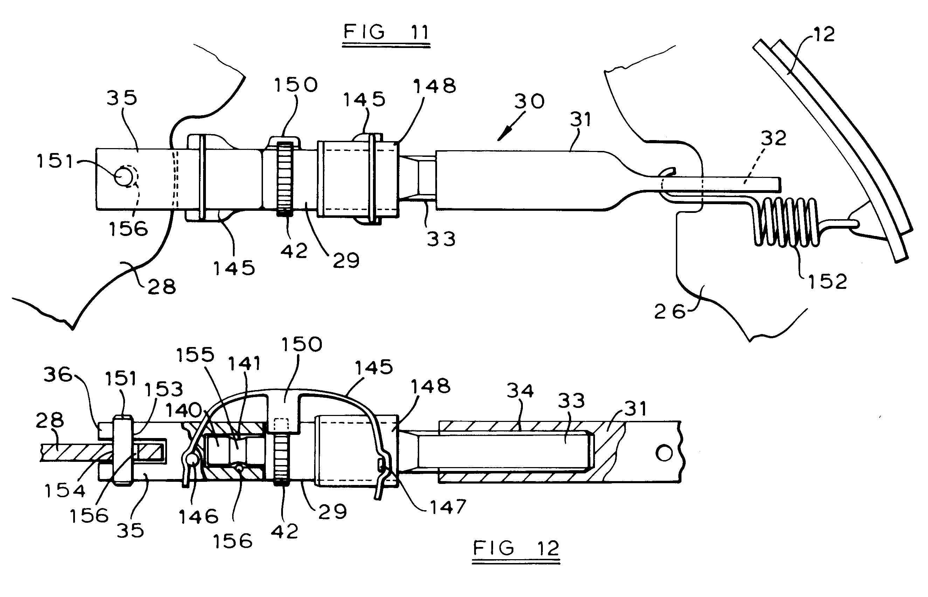

In the embodiment illustrated in Figures 9 and 10, the first member 31 of strut 30 has a screw threaded shank portion 100, which engages a correspondingly internally threaded portion of a spindle 101. The spindle 101 is provided with a ratchet wheel formation 42. The spigot portion 37 of member 35 rotatably engages in a plane socket portion in the end of spindle 101 remote from that engaged by member 31. The spindle 101 may thus be rotated relative to the members 31 and 35, by means of pawl 55 and ratchet formation 42, thereby adjusting the length of strut 30, in the manner described above.

A tubular member 90, as illustrated in Figure 8, is rotatably mounted on the spindle 101 and is located thereon by washer 102 and circlip 103 to provide anchor points for one end of spring 50 and for bimetallic element 105.

Member 35 is provided with two pairs of axially spaced lug formations 110 and 111, one lug formation 110 and 111 of each pair being positioned diametrically of the other on a diameter transverse to the slot in the forked end portion 36. Each lug formation 110 and 111 has a radial face at the end thereof remote from spigot portion 27. Flats 112 are provided on the member 35 each side of the lug formations 110 and 111, the lugs 110 and 111 extending circumferentially between the flats 112.

A bracket 115 has a central base portion 116 with a pair of arms 117 and 118 extending substantially perpendicular to the same side of base portion 116. The base portion 116 has a central circular aperture which locates over the spigot portion 37 of member 35, so that the central base portion 116 engages a shoulder 119 between the spigot portion 37 and forked end portion 36. One arm 117 extends the full length of the forked end portion 36 of member 35, the end 120 of the arm 117 being bent over to engage the radial end of the adjacent lug formation 110 to axially locate the bracket 115. The end 121 of arm 118 is bent outwardly and towards the spigot formation 37, at a position which is on the same side of lug formation 111 as the spigot formation 37. The bent end 121 of arm 118 serves as an abutment for the spring 50, the outer end 53 of the aperture 51 engaging over the radial face of lug formation 111 to provide axial location. The sides of aperture 51 also engage the flats 112 which define the sides of lug formation 111, thereby preventing rotation of spring 50 and tubular member 90.

A pair of parallel flange formations 125 are provided on either side of arm 117 adjacent the end thereof. These flange formations 125 are provided with projections 126 which extend parallel to arm 117 towards the base portion 116. Recesses 127 are provided in the projections 126. The bimetallic element 105 extends parallel to the arm 117 so that the end 130 thereof locates between the flange formations 125 of bracket 115. The bimetallic element 105 has a pair of laterally extending lugs 131 adjacent end 130, these lugs 131 being located such that when the members of the strut 30 are fully compressed by the pull off springs 20, 21 the lugs 131 will be aligned axially with the recesses 127. Under normal operating temperatures, the lugs 131 are clear of recesses 127, so that adjustment of the strut 30 will occur as described above. However if the temperature of the brake components rises above a predetermined value the bimetallic element 105 will deform so that the lugs 131 engage in recesses 127 preventing further adjustment.

In the embodiment illustrated in Figures 11 and 12, an internally threaded portion 34 of member 31 engages a correspondingly threaded shank portion 33 at one end of intermediate member 29 and a spigot portion 140 at the other end of intermediate member 29 engages in a socket portion 141 of member 35. As in the previous embodiments a spring element 145 is located between a formation 146 on member 35 and a formation 147 on a sleeve 148 rotatably mounted and located axially on intermediate member 29. Spring 145 is however in tension and acts between formations 146 and 147 to bias member 35 towards intermediate member 29 and member 31.

As with the previous embodiments, the spring 145 has a pawl formation 150 which acts on a ratchet wheel formation 42 mounted on the intermediate member 29, for rotation thereof.

The forked end portion 32 of member 31 is biased into engagement with the web 26 of the associated shoe 12 by means of a tension spring 152, which applies a significantly higher load than spring 145. The web 28 of shoe 13 engages in a forked end portion 26 of member 35 and in the brakes off condition will abut member 35. A pin 151 is an interference fit through holes 153 in the forked end portion 36 of member 35 and passes through an enlarged hole 154 in web 28 to provide a clearance 156 when web 28 abuts member 35.

The spigot portion 140 of intermediate member 29 has an axially extending circumferential groove 155. A pin 156 extends through the socket portion 141 of member 35 to engage the groove 155 tangentially. The pin 156 is of smaller diameter than the axial width of groove 155, so as to permit limited axial movement between intermediate member 29 and member 35 whilst permitting relative rotation between the intermediate member 29 and member 35.

When the brake is applied hydraulically, the brake shoes 12 and 13 will first move apart to take up the clearance 156 between pin 151 and web 28 and also the clearance between the threads of portions 33 and 34. Further movement of shoes 12 and 13 will then cause member 35 to move away from intermediate member 29 to the extent of the limited movement permitted by engagement of pin 156 in groove 155 with the forked end portion 32 remaining in contact with the web 26 of shoe 12 due to the preload of tension spring 152. This movement will expand the spring 145, causing pawl 150 to move relative to ratchet wheel formation 42, so that the intermediate member 29 is rotated to adjust the length of the strut 30. In the unlikely event that spring 145 is unable to effect adjustment of the strut 30 further expansion of the brake shoes after member 35 has reached the limit of its movement relative to intermediate member 29, is permitted by spring 152, member 31 moving away from brake shoe 12, so that full braking effort can be applied. The clearance 156 and clearance between the threads of portions 33 and 34 will ensure that a minimum clearance is maintained, before adjustment of the strut 30 will take place.

With this mechanism, relative movement between the intermediate member 29 and member 35 is limited by engagement of pin 156 in groove 155, which will prevent overstressing of spring 145 in operation.

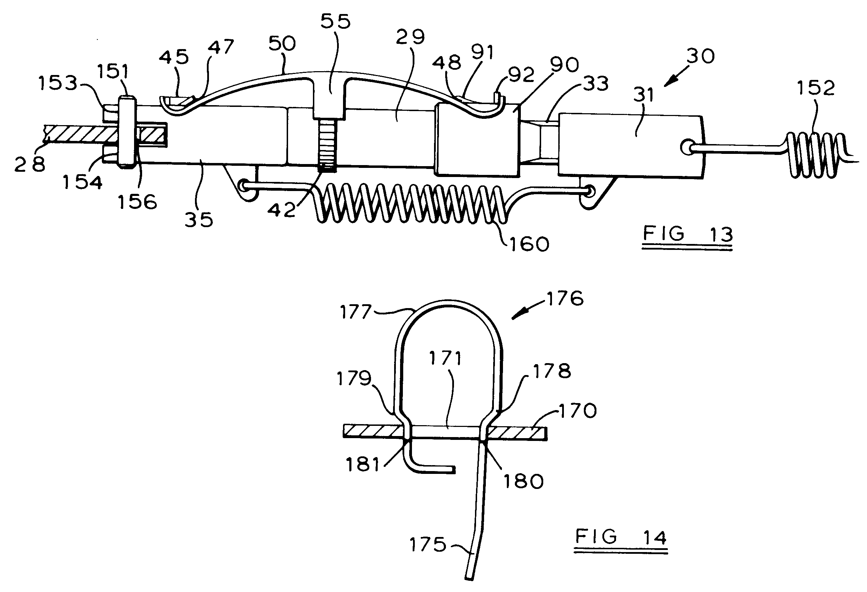

In the adjuster illustrated in Figure 13, a tension spring 160 acts between members 31 and 35 to bias member 35 towards intermediate member 29. This permits spring member 50 to act in compression, the spring member 50 being located relative to member 35 and intermediate member 29 in a manner similar to that illustrated in Figure 7.

With this embodiment, upon hydraulic actuation the shoes 12 and 13 will move apart first taking up clearance 156 and the clearance between the threads of portions 36 and 34. Member 35 will then be moved away from intermediate member 29, against the load applied by spring 160, permiting spring element 50 to expand and effect adjustment of the length of the strut 30, in the manner described above.

In the above embodiments the pawl formations 55, 150 are formed integrally of the spring elements 50, 145. The pawl formations 55, 150 must be sufficiently flexible to remain in engagement with the ratchet wheel 42 and ride up the inclined faces of the teeth of the ratchet wheel without applying a load thereon sufficient to cause backward rotation of the ratchet wheel and shortening of the strut 30. The spring elements 50, 145 must at the same time be sufficiently resilient to maintain the opposed components in abutment under operating conditions. In order to achieve these ends it is necessary for the spring element to be stiffer than the pawl formation. This may be achieved by suitable dimensioning of the spring elements 50, 145 and pawl formations 55, 150. In an alternative embodiment as illustrated in Figure 14, the pawl formation 175 may be formed separately from the spring element 170.

As illustrated in Figure 14, the leaf spring element 170 is formed with an aperture 171 at its mid-point. A clip formation 176 defining pawl formation 175 is located in the aperture 171. The clip formation 176 has a spring formation 177 which is dimensioned to pass through the aperture 171 when compressed. The spring formation 177 has a pair of joggled formations 178 and 179 which abut one side of leaf spring element 170, shoulder portions 180, 181 which are wider than the aperture 171 being provided at each end of the spring formation 177 to abut the other side of the leaf spring element 170. The pawl formation 175 extends from one end of the spring formation 177, an arm 182 extending from the other end of spring formation 177 towards pawl formation 175 to prevent overstressing of the spring formation 177.

With this arrangement, the spring element 170 and clip formation 176 may be made of different materials and/or different thicknesses, so that the resilience of the spring element 170 and pawl formation 175 may be varied as required. Furthermore the clip formation may be pivotal about the abutment of formation 179 with spring element 170, spring formation 177 acting to bias the pawl formation 175 towards the ratchet wheel so that the desired loading of the pawl formation 175 onto the ratchet wheel may be achieved by suitable adjustment of the spring rate of spring formation 177.

## Claims

1. An automatic adjuster for an internal shoe drum brake comprising a strut (30) adapted to non-rotatably engage one brake shoe (12) at one end and a second brake shoe (13) at the other end; said strut (30) comprising three coaxial members, a first end member (31) being interconnected with an intermediate member (29) by means of inter-engaging thread formations (33, 34) and a second end member (35) being slidingly interconnected to the intermediate member (29) and free to rotate relatively thereto; a sleeve member (40; 90; 148) is mounted for rotation on the intermediate member (29) and is located axially with respect thereto; a ratchet wheel (42) is provided on the intermediate member (29) between said second member (35) and sleeve member (40; 90; 148) for rotation therewith; a leaf spring (50; 145) acts between said second end member (35) and sleeve member (40; 90; 148), said spring (50; 145) having a pawl formation (55; 150) which engages the ratchet wheel (42) and upon movement apart of the second end member (35) and intermediate member (29) will cause the ratchet wheel (42) to rotate; characterised in that formations (45, 46; 83; 91; 92; 111, 121; 146, 147) are provided on the second end member (35) and sleeve member (40; 90; 148), the spring (50; 145) engaging at each end, an undercut transverse face (47, 48) of one of the formations (45, 46; 83; 91; 92; 111, 121; 146, 147) to provide radial and axial location of the spring (50; 145), and axially extending faces of the formations (45, 46; 83; 91; 92; 111, 121; 146, 147) to provide rotational location.

2. An automatic adjuster according to Claim 1 characterised in that the leaf spring (50) acts in compression biasing the intermediate member (29) and second end member (35) apart.

3. An automatic adjuster according to Claim 2 characterised in that apertures (51, 52) are provided at each end of the leaf spring (50; 145), the end portions of the leaf spring (50; 145) defining the outer edges of each aperture (51, 52) being bent substantially normal to the plane of the spring (50; 145).

4. An automatic adjuster according to Claim 3 characterised in that lugs (45, 46; 83; 91; 111, 121) on the second end member (35) and sleeve member (40; 90) engage through the apertures (51, 52) in the leaf spring (50), the inner edges of the apertures (51, 52) engaging the undercut faces of the lugs (45, 46; 83; 91; 111, 121) and the outer edges of the apertures (51, 52) engaging the outer faces of the lugs (45, 46; 83; 91; 111, 121).

5. An automatic adjuster according to any one of Claims 2 to 4 characterised in that the sleeve member (40) is of stepped cylindrical formation, a plate (81) being located with respect to the stepped portion (80) of the sleeve member (40), a portion (83) of the plate (81) being bent away from the stepped portion (80) of the sleeve member (40) to define the undercut transverse face for engagement by the spring (50).

6. An automatic adjuster according to any one of Claims 2 to 4 characterised in that the sleeve member (90) is of tubular section a tab (91) being pressed out of the tubular sleeve (90), said tab (91) being inclined to provide the undercut face for engagement by the spring (50).

7. An automatic adjuster according to Claim 6 characterised in that a second tab (92) is pressed out of the tubular sleeve (90), said second tab (92) extending radially and providing means for secondary axial location of the leaf spring (50).

8. An automatic adjuster according to any one of claims 2 to 4 characterised in that a lug (111) is provided on the second end member (35), the lug (111) having a radial face at the end remote from the intermediate member (29), a bracket (115) being provided on the second end member (35) and located axially thereof, the bracket (115) defining a tab formation (121) which is bent outwardly from the second end member (35) and towards the intermediate member (29) to provide the undercut transverse face for engagement by spring (50), the tab formation (121) being positioned intermediate of the intermediate member (29) and lug formation (111), the radial face and side edges of the lug (111) serving to locate the spring (50) axially and rotationally of the second end member (35).

9. An automatic adjuster according to any one of claims 1 to 8 characterised in that a tension spring (160) acts between the first and second end members (31, 35) to bias the second end member (35) and the intermediate member (29) together, the first and second end members (31, 35) being restrained to move with the brake shoes (12, 13).

10. An automatic adjuster according to claim 9 characterised in that means (156) for limited movement is provided between one of the end members (35) and the associated shoe (13).

11. An automatic adjuster according to claim 9 or 10 characterised in that one of the end members (31) is biassed into engagement with its associated brake shoe (12) by spring means (152), said spring means (152) applying a greater load than the leaf spring (145).

12. An automatic adjuster according to any one of the preceding claims characterised in that a temperature sensitive element (60; 95; 105) is provided on one of said second end member (35) or sleeve member (40; 90), a formation (61; 87; 96; 131) being provided on said temperature sensitive element (60; 95; 105) to engage a corresponding formation (62; 85; 97; 127) on said other of said second end member (35) or sleeve member (40; 90) when the temperature of the brake rises above a predetermined value, inter-engagement of the corresponding formations (61, 62; 85, 87; 96, 97; 131, 127) preventing relative movement of the second end member (35) and intermediate member (29).

13. An automatic adjuster according to claim 12 characterised in that the temperature sensitive element (60; 95; 105) is a bimetallic strip element.

14. An automatic adjuster according to claim 12 or 13 characterised in that the temperature sensitive element is secured to the second end member (35).

15. An automatic adjuster according to any one of claims 12 to 14 characterised in that an aperture (61) is provided in the temperature sensitive element (60), and a projection (62) is provided on the other of the second end member (35) or sleeve member (40), the temperature sensitive element (60) being arranged such that under normal operating conditions it is clear of the projection (62) but above the predetermined operating temperature, the projection (62) extends through the aperture (61) in the temperature sensitive element (60).

16. An automatic adjuster according to any one of claims 12 to 14 characterised in that the temperature sensitive element (60) extends through an aperture (85, 88) in a plate (81) secured with respect to said other of the second end member (35) or sleeve member (40), the temperature sensitive element (60) having a necked portion (87) corresponding axially with the plate (81) and the aperture (85,88) having a reduced width portion (85) so that at normal operating temperatures the temperature sensitive element (60) will extend through the wider portion (88) of the aperture (85, 88) while above the predetermined operating temperature the necked portion (87) of the temperature sensitive element (60) will engage with the reduced width portion (85) of the aperture (85, 88) to prevent relative movement of said second end member (35) with respect to the sleeve member (40) and intermediate member (29).

17. An automatic adjuster according to any one of claims 12 to 14 characterised in that the temperature sensitive element (95) has an aperture (96) which engages over a projection (97) on said other of the second end member (35) or sleeve member (90), said projection (97) being stepped axially, the temperature sensitive element (95) being located radially with respect to a shorter axially extending portion (98) of the projection (97) under normal operating conditions and with respect to a longer axially extending portion (99) of the projection (97) when the operating temperature rises above the predetermined temperature.

18. An automatic adjuster according to claim 12 or 13 characterised in that the second end member (35) is slidingly and rotationally mounted with respect to the intermediate member by means of a spigot formation (37) which engages a socket formation on the intermediate member (29), the end of the second end member (35) remote from the spigot formation (37) having two pairs of axially spaced lugs (110, 111) one lug (110, 111) of each pair being disposed diametrically of the other, the end faces of the lugs (110, 111) remote from the spigot formation (37) being radial, a bracket member (115) having a base portion (116) with a pair of substantially perpendicular arms (117, 118) extending to one side is located on the second end member (35) the spigot (37) locating through an aperture in the base portion (116), one arm (117) of bracket (116) extends along the second end member (35), the end (120) of arm (117) being bent over to engage the radial face of one of the lugs (110) to locate the bracket (115) axially of the second end member (35), the arm (117) defining detent means (127) for engagement by a temperature sensitive element (105), the temperature sensitive element being secured to a sleeve member (90) rotatably mounted on the intermediate member (29).

19. An automatic adjuster according to claim 18 in which a pair of parallel flange formations (125) are provided axially towards the end of arm (117), the flange formations (125) having axially extending portions (126) with recesses (127) formed therein, the temperature sensitive element (105) extending parallel to arm (117) and between flange formations (125), a pair of laterally extending lugs (131) being provided on the temperature sensitive element (105) for engagement of the recesses (127), when the temperature of the brake rises above a predetermined value.

20. An automatic adjuster according to claim 18 or 19 characterised in that the end (121) of the other arm (118) is bent outwardly and towards spigot portion (37) at a point intermediate of the intermediate member (29) and lugs (111), the end (121) providing the undercut transverse face for engagement by spring (50) and the radial face and side edges of lug (111) serving to locate the spring (50) axially and rotationally of the second end member (35).

21. An automatic adjuster according to any one of claims 18 to 20 characterised in that the portion of the second end member (35) defining lugs (110 and 111) is provided with flats (112), lugs (110 and 111) extending circumferentially between the flats (112).

22. An automatic adjuster according to claim 1 characterised in that the leaf spring (145) acts in tension biasing the intermediate member (29) and second end member (35) together.

23. An automatic adjuster according to claim 22 characterised in that the first and second end members (31, 35) are restrained to move with the brake shoes (12, 13) with which they are associated.

24. An automatic adjuster according to claim 23 characterised in that means (156) is provided for permitting limited movement between one end member (35) and the associated shoe (13).

25. An automatic adjuster according to claim 22 or 23 characterised in that one of the end members (31) is biased into engagement with its associated brake shoe (12), by spring means (152), said spring means (152) applying a greater load than the leaf spring (145).

26. An automatic adjuster according to any one of claims 22 to 25 characterised in that means (155, 156) is provided to limit axial sliding movement of the second end member (35) relative to intermediate member (29).

27. An automatic adjuster according to claim 26 characterised in that a spigot portion (140) on intermediate member (29) engages a socket portion (141) on the second end member (35), a circumferential groove is provided on the spigot portion (140) and a pin (156) is provided through the socket portion (141) and engages the groove (155) tangentially, to limit relative axial movement of the intermediate member (29) and second end member (35).

28. An automatic adjuster according to any one of the preceding claims characterised in that the pawl formation (175) is formed separately of the leaf spring element (170).

29. An automatic adjuster according to claim 28 characterised in that the pawl formation (175) is pivotal of the leaf spring element (170) and is biased into engagement with the ratchet wheel formation (42).

## Patentansprüche

1. Automatische Nachstelleinrichtung für eine Innenbackentrommelbremse, mit einer Druckstrebe (30), die ausgebildet ist, um an einem ersten Ende eine Bremsbacke (12) und an dem anderen Ende eine zweite Bremsbacke (13) drehfest aufzunehmen; wobei die Druckstrebe (30) drei koaxiale Teile aufweist, von denen ein erstes Endteil (31) mittels verbindender Gewindeanordnungen (33, 34) mit einem Zwischenteil (29) verbunden ist und ein zweites Endteil (35) gleitbeweglich mit dem Zwischenteil (29) verbunden ist und relativ zu diesem frei drehbar ist; ein Buchsenteil (40; 90; 148) drehbar auf dem Zwischenteil (29) angeordnet ist und in Axialrichtung zu diesem positioniert ist; ein Sperrzahnrad (42) auf dem Zwischenteil (29) zwischen dem zweiten Teil (35) und dem Buchsenteil (40; 90; 148) drehfest zu diesen angeordnet ist; eine Blattfeder (50; 145) zwischen dem zweiten Endteil (35) und dem Buchsenteil (40; 90; 148) wirkt, wobei die Feder (50; 145) eine Klinkenanordnung (55; 150) aufweist, die im Eingriff mit dem Sperrzahnrad (42) steht und bei einer Auseinanderbewegung des zweiten Endteiles (35) und des Zwischenteiles (29) eine Drehbewegung des Sperrzahnrades (42) bewirkt, dadurch gekennzeichnet, daß Anordnungen (45, 46; 83; 91; 92; 111, 121; 146, 147) an dem zweiten Endteil (35) und dem Buchsenteil (40; 90; 148) vorgesehen sind, die der Feder (50; 145) an deren Enden zugeordnet sind, wobei eine hinterschnittene Querseite (47, 48) an einer der Anordnungen (45, 46; 83; 91; 92; 111, 121; 146, 147) vorgesehen ist, um eine radiale und axiale Festlegung der Feder (50; 145) zu bewirken und sich in Axialrichtung erstreckende Seiten der Anordnungen (45, 46; 83; 91; 92; 111, 121; 146, 147) vorgesehen sind, um eine drehfeste Festlegung zu bewirken.

2. Automatische Nachstelleinrichtung nach Anspruch 1, dadurch gekennzeichnet, daß die Blattfeder (50) als Druckfeder wirkt, die das Zwischenteil (29) und das zweite Endteil (35) auseinanderdrückt.

3. Automatische Nachstelleinrichtung nach Anspruch 2, dadurch gekennzeichnet, daß die Öffnungen (51, 52) an jedem Ende der Blattfeder (50; 145) vorgesehen sind, wobei die Endbereiche der Blattfeder (50; 145) die äußeren Kanten jeder Öffnung (51, 52) begrenzen, die im wesentlichen senkrecht zu der Ebene der Feder (50; 145) gebogen sind.

4. Automatische Nachstelleinrichtung nach Anspruch 3, dadurch gekennzeichnet, daß Ansätze (45, 46; 83; 91; 111, 121) auf dem zweiten Endteil (35) und dem Buchsenteil (40; 90) in die Öffnungen (51, 52) an der Blattfeder (50) eingreifen, wobei die Innenkanten der Öffnungen (51, 52) mit den hinterschnittenen Seiten der Ansätze (45, 46; 83; 91; 111, 121) zusammenwirken und die Außenkanten der Öffnungen (51, 52) mit den Außenseiten der Ansätze (45, 46; 83; 91; 111, 121) zusammenwirken.

5. Automatische Nachstelleinrichtung nach einem der Ansprüche 2 bis 4, dadurch gekennzeichnet, daß das Buchsenteil (40) eine abgestufte Zylinderanordnung aufweist, eine Platte (81) bezüglich des abgestuften Bereichs (80) des Buchsenteiles (40) angeordnet ist, ein Bereich (83) der Platte (81) von dem abgestuften Bereich (80) des Buchsenteiles (40) weggebogen ist, um eine hinterschnittene Querseite für den Eingriff der Feder (50) zu bilden.

6. Automatische Nachstelleinrichtung nach einem der Ansprüche 2 bis 4, dadurch gekennzeichnet, daß das Buchsenteil (90) als rohrförmiger Bereich ausgebildet ist und eine Zunge (91) von der rohrförmigen Buchse (90) weggebogen ist, wobei die Zunge (91) eine Neigung aufweist, um eine hinterschnittene Fläche zum Eingriff für die Feder (50) zu bilden.

7. Automatische Nachstelleinrichtung nach Anspruch 6, dadurch gekennzeichnet, daß eine zweite Zunge (92) von der rohrförmigen Buchse (90) weggebogen ist, wobei die Zunge (92) sich in Radialrichtung erstreckt und eine Einrichtung zur zweiten axialen Fixierung der Blattfeder (50) bildet.

8. Automatische Nachstelleinrichtung nach einem der Ansprüche 2 bis 4, dadurch gekennzeichnet, daß ein Ansatz (111) auf dem zweiten Endteil (35) vorgesehen ist, wobei der Ansatz (111) an einem entfernt zum Zwischenteil (29) liegenden Ende eine Radialseite aufweist, eine Klammer (115) an dem zweiten Endteil (35) vorgesehen ist und in Axialrichtung zu diesem angeordnet ist, wobei die Klammer (115) eine Zungenanordnung (121) bildet, die von dem zweiten Endteil (35) nach außen gegen das Zwischenteil (29) gebogen ist, um eine hinterschnittene Querseite zum Eingriff für die Feder (50) zu bilden, wobei die Zungenanordnung (121) zwischen dem Zwischenteil (29) und der Ansatzanordnung (111) angeordnet ist, und die Radialseite und die Seitenkanten des Ansatzes (111) zur Festlegung der Feder (50) in Axial- und Drehrichtung des zweiten Endteiles (35) dienen.

9. Automatische Nachstelleinrichtung nach einem der Ansprüche 1 bis 8, dadurch gekennzeichnet, daß eine Zugfeder (160) zwischen den ersten und den zweiten Endteilen (31, 35) wirkt, um das zweite Endteil (35) und das Zwischenteil (29) miteinander zu verspannen, wobei das erste und das zweite Endteil (31, 35) zur gemeinsamen Bewegung mit den Bremsbacken (12, 13) festgelegt sind.

10. Automatische Nachstelleinrichtung nach Anspruch 9, dadurch gekennzeichnet, daß zwischen einem der Endteile (35) und der zugeordneten Backe (13) eine Einrichtung (156) zur Bewegungsbegrenzung vorgesehen ist.

11. Automatische Nachstelleinrichtung nach Anspruch 9 oder 10, dadurch gekennzeichnet, daß eines der Endteile (31) durch eine Federeinrichtung (152) mit seiner zugeordneten Bremsbacke (12) verspannt ist, wobei die Federeinrichtung (152) eine größere Federkraft aufbringt als die Blattfeder (145).

12. Automatische Nachstelleinrichtung nach einem der vorhergehenden Ansprüche, dadurch gekennzeichnet, daß ein temperaturempfindliches Element (60; 95; 105) an dem Endteil (35) oder dem Buchsenteil (40; 90) angeordnet ist, eine Anordnung (61; 87; 96; 131) an dem temperaturempfindlichen Element (60; 95; 105) vorgesehen ist, die mit einer zugeordneten Anordnung (62; 95; 97; 127) an dem anderen Endteil (35) oder dem Buchsenteil (40; 90) zusammenwirkt, wenn die Temperatur der Bremse über einen vorbestimmten Wert ansteigt, wobei der Eingriff der zugeordneten Anordnungen (61, 62; 85, 87; 96, 97; 131, 127) eine Relativbewegung des zweiten Endteiles (35) und des Zwischenteiles (29) verhindert.

13. Automatische Nachstelleinrichtung nach Anspruch 12, dadurch gekennzeichnet, daß das temperaturempfindliche Element (60; 95; 105) als Bimetallstreifenelement ausgebildet ist.

14. Automatische Nachstelleinrichtung nach Anspruch 12 oder 13, dadurch gekennzeichnet, daß das temperaturempfindliche Element auf dem zweiten Endteil (35) festgelegt ist.

15. Automatische Nachstelleinrichtung nach einem der Ansprüche 12 bis 14, dadurch gekennzeichnet, daß an dem temperaturempfindlichen Element (60) eine Öffnung (61) und an dem zweiten Endteil (35) oder dem Buchsenteil (40) ein Ansatz (62) vorgesehen ist, wobei das temperaturempfindliche Element (60) derart ausgebildet ist, daß es unter normalen Betriebsbedingungen von dem Ansatz (62) beabstandet ist, jedoch bei Überschreitung einer vorbestimmten Betriebstemperatur der Ansatz (62) in die Öffnung (61) in dem temperaturempfindlichen Element (60) eingreift.

16. Automatische Nachstelleinrichtung nach einem der Ansprüche 12 bis 14, dadurch gekennzeichnet, daß das temperaturempfindliche Element (60) sich durch eine Öffnung (85, 88) in einer Platte (81) erstreckt, die bezüglich des Endteiles (35) oder des Buchsenteiles (40) festgelegt ist, das temperaturempfindliche Element einen Halsbereich (87) aufweist, der in Axialrichtung mit der Platte (81) und der einen reduzierten Breitenbereich (85) aufweisenden Öffnung (85, 88) korrespondiert, so daß unter normalen Betriebsbedingungen das temperaturempfindliche Element (60) sich durch den breiteren Bereich (88) der Öffnung (85, 88) erstreckt, während beim Überschreiten der vorbestimmten Betriebstemperatur der Halsbereich (87) des temperaturempfindlichen Elements (60) in den breitenreduzierten Bereich (85) der Öffnung (85, 88) eingreift, um eine Relativbewegung des zweiten Endteiles (35) bezüglich des Buchsenteiles (40) und des Zwischenteiles (29) zu verhindern.

17. Automatische Nachstelleinrichtung nach einem der Ansprüche 12 bis 14, dadurch gekennzeichnet, daß das temperaturempfindliche Element (95) eine Öffnung (96) aufweist, die einen Ansatz (97) an dem zweiten Endteil (35) oder dem Buchsenteil (90) übergreift, wobei der Ansatz (97) in Axialrichtung abgestuft ist und das temperaturempfindliche Element (95) unter normalen Betriebsbedingungen radial an einem sich in Axialrichtung kürzer erstreckenden Bereich (98) des Ansatzes (97) angeordnet ist und wenn die Betriebstemperatur über eine vorbestimmte Temperatur ansteigt an einem sich in Axialrichtung länger erstreckenden Bereich (99) des Ansatzes (97) angeordnet ist.

18. Automatische Nachstelleinrichtung nach Anspruch 12 oder 13, dadurch gekennzeichnet, daß das zweite Endteil (35) mittels einer Zapfenanordnung (37) bezüglich des Zwischenteils gleitbeweglich und drehbeweglich angeordnet ist, die mit einer an dem Zwischenteil (29) vorgesehenen Buchsenanordnung zusammenwirkt, daß das von der Zapfenanordnung (37) entfernte Ende des zweiten Endteiles (35) zwei Paare von axial beabstandeten Ansätzen (110, 111) aufweist, wobei ein Ansatz (110, 111) jedes Paares diametral zu dem anderen angeordnet ist, daß die von der Zapfenanordnung (37) entfernten Endseiten der Ansätze (110, 111) radial ausgerichtet sind, daß ein Klammerteil (115), das einen Basisbereich (116) mit einem Paar von im wesentlichen senkrechten, sich zu einer Seite erstreckenden Armen (117, 118) aufweist, auf dem zweiten Endteil (35) angeordnet ist, wobei der Zapfen (37) durch eine Öffnung in den Basisbereich (116) durchtritt, daß ein Arm (117) in der Klammer (116) sich längs des zweiten Endteiles (35) erstreckt, daß das Ende (120) des Armes (117) umgebogen ist, um mit der Radialseite eines der Ansätze (110) zusammenzuwirken, um die Klammer (115) in Axialrichtung zu dem zweiten Endteil (35) zu fixieren, daß der Arm (117) eine Halteeinrichtung (127) zum Zusammenwirken mit einem temperaturempfindlichen Element (105) aufweist, wobei das temperaturempfindliche Element auf einem Buchsenteil (90) festgelegt ist, das drehbeweglich auf dem Zwischenteil (29) angeordnet ist.

19. Automatische Nachstelleinrichtung nach Anspruch 18, bei der ein Paar von parallelen, sich in Axialrichtung gegen das Ende des Armes (117) erstreckenden Flanschanordnungen (125) vorgesehen ist, wobei die Flanschanordnungen (125) sich in Axialrichtung erstreckende Bereich (126) mit hierin eingebrachten Aussparungen (127) aufweisen, das temperaturempfindliche Element (105) sich parallel zu dem Arm (117) und zwischen den Flanschanordnungen (125) erstreckt, und ein Paar von sich zur Seite erstreckenden Ansätzen (131) an dem temperaturempfindlichen Element (105) zum Zusammenwirken mit den Aussparungen (127) vorgesehen ist, wenn die Temperatur in der Bremse über einen vorbestimmten Wert ansteigt.

20. Automatische Nachstelleinrichtung nach Anspruch 18 oder 19, dadurch gekennzeichnet, daß das Ende (121) des anderen Armes (118) an einem Punkt zwischen dem Zwischenteil (29) und den Ansätzen (111) nach außen und in Richtung der Zapfenanordnung (37) gebogen ist, wobei das Ende (121) die hinterschnittene Querseite zum Zusammenwirken mit der Feder (50) darstellt und die Radialseite und die Seitenkanten des Ansatzes (111) dazu dienen, um die Feder (50) in Axialrichtung und in Drehrichtung auf dem zweiten Endteil (35) anzuordnen.

21. Automatische Nachstelleinrichtung nach einem der Ansprüche 18 bis 20, dadurch gekennzeichnet, daß der die An sätze (110 und 111) aufweisende Bereich des zweiten Endteiles (35) Vertiefungen (112) aufweist, wobei die Ansätze (110 und 111) sich am Umfang zwischen den Vertiefungen (112) erstrecken.

22. Automatische Nachstelleinrichtung nach Anspruch 1, dadurch gekennzeichnet, daß die Blattfeder (145) das Zwischenteil (29) und das Endteil (35) miteinander verspannt.

23. Automatische Nachstelleinrichtung nach Anspruch 22, dadurch gekennzeichnet, daß das erste und das zweite Endteil (31, 35) festgelegt sind, um sich gemeinsam mit den Bremsbacken (12, 13) zu bewegen, mit denen sie verbunden sind.

24. Automatische Nachstelleinrichtung nach Anspruch 23, dadurch gekennzeichnet, daß eine Einrichtung (156) vorgesehen ist, um zwischen dem Endteil (35) und der zugeordneten Backe (13) eine begrenzte Bewegung zu gestatten.

25. Automatische Nachstelleinrichtung nach Anspruch 22 oder 23, dadurch gekennzeichnet, daß eines der Endteile (31) mittels einer Federeinrichtung (152) mit der zugeordneten Bremsbacke (12) verspannt ist, wobei die Federeinrichtung (152) eine größere Federkraft aufbringt als die Blattfeder (145).

26. Automatische Nachstelleinrichtung nach einem der Ansprüche 22 bis 25, dadurch gekennzeichnet, daß eine Einrichtung (155, 156) vorgesehen ist, um die axiale Gleitbewegung des zweiten Endteiles (35) bezüglich des Zwischenteiles (29) zu begrenzen.

27. Automatische Nachstelleinrichtung nach Anspruch 26, dadurch gekennzeichnet, daß ein Zapfenbereich (140) auf dem Zwischenteil (29) mit einem Buchsenbereich (141) auf dem zweiten Endteil (35) zusammenwirkt, daß an dem Zapfenbereich (140) eine Umfangsnut vorgesehen ist und ein Stift (156) durch den Buchsenbereich (141) geführt ist, der tangential in die Nut (155) eingreift, um die axiale Relativbewegung des Zwischenteiles (29) und des Endteiles (35) zu begrenzen.

28. Automatische Nachstelleinrichtung nach einem der vorhergehenden Ansprüche, dadurch gekennzeichnet, daß die Klinkenanordnung (175) getrennt von dem Blattfederelement (170) ausgebildet ist.

29. Automatische Nachstelleinrichtung nach Anspruch 28, dadurch gekennzeichnet, daß die Klinkenanordnung (175) bezüglich des Blattfederelementes (170) schwenkbar ist und in Eingriff mit der Sperrzahnradanordnung (42) verspannt ist.

## Revendications

1. Dispositif de réglage automatique pour frein à tambour à patins intérieurs comportant une biellette (30) adaptée pour être en contact de manière non rotative avec un premier patin (12) de frein au niveau d'une première extrémité et avec un second patin (13) de frein à l'autre extrémité, ladite biellette (30) comportant trois éléments coaxiaux, un premier élément (31) formant extrémité étant relié à un élément intermédiaire (29) par l'intermédiaire de structures (33, 34) en prise et un second élément (35) formant extrémité étant relié de manière coulissante à l'élément intermédiaire (29) et libre de tourner par rapport à ce dernier, un élément formant manchon (40; 90; 148) étant monté pour tourner sur l'élément intermédiaire (29) et étant positionné axialement par rapport à ce dernier, une roue à rochet (42) étant agencée sur l'élément intermédiaire (29) entre ledit second élément (35) et l'élément formant manchon (40; 90; 148) pour tourner avec ceux-ci, un ressort en lame (50; 145) agissant entre ledit second élément (35) formant extrémité et l'élément formant manchon (40; 90; 148), ledit ressort (50; 145) comportant une structure (55; 150) formant cliquet qui vient en prise avec la roue à rochet (42) et, lors de l'écartement du second élément (35) formant extrémité et de l'élément intermédiaire (29), amène la roue à rochet (42) à tourner, caractérisé en ce que des structures (45, 46; 83; 91; 92; 111, 121; 146, 147) sont agencées sur le second élément (35) formant extrémité et l'élément formant manchon (40; 90; 148), le ressort (50; 145) étant en contact au niveau de chaque extrémité avec une face transversale (47, 48) découpée de l'une des structures (45, 46; 83; 91; 92; 111, 121; 146, 147) pour fournir un positionnement radial et axial du ressort (50; 145) et des faces des structures (45, 46; 83; 91; 92; 111, 121; 146, 147) s'étendant axialement pour fournir un positionnement en rotation.

2. Dispositif de réglage automatique selon la revendication 1, caractérisé en ce que le ressort en lame (50) agit en compression en rappelant l'élément intermédiaire (29) et le second élément (35) formant extrémité dans un sens les écartant.

3. Dispositif de réglage automatique selon la revendication 2, caractérisé en ce que des ouvertures (51, 52) sont agencées au niveau de chaque extrémité du ressort en lame (50; 145) les parties formant extrémités du ressort en lame (50; 145) définissant les bords extérieurs de chaque ouverture (51, 52) étant recourbées à peu près perpendiculairement au plan du ressort (50; 145).

4. Dispositif de réglage automatique selon la revendication 3, caractérisé en ce que des pattes (45, 46; 83; 91; 111, 121) situées sur le second élément (35) formant extrémité et l'élément (40; 90) formant manchon sont en prise à travers les ouvertures (51, 52) situées dans le ressort en lame (50), les bords intérieurs des ouvertures (51, 52) étant en contact avec les faces découpées des pattes (45, 46; 83; 91; 111, 121) et les bords extérieurs des ouvertures (51, 52) étant en contact avec les faces extérieures des pattes (45, 46; 83; 91; 111,121).

5. Dispositif de réglage automatique selon l'une quelconque des revendications 2 à 4, caractérisé en ce que l'élément (40) formant manchon est constitué d'une structure cylindrique étagée, une plaque (81) étant positionnée par rapport à la partie étagée (80) de l'élément (40) formant manchon, une partie (83) de la plaque (81) étant recourbée en s'éloignant de la partie étagée (80) de l'élément (40) formant manchon pour définir la face transversale découpée destinée à être en contact avec le ressort (50).

6. Dispositif de réglage automatique selon l'une quelconque des revendications 2 à 4, caractérisé en ce que l'élément (90) formant manchon est constitué d'un tronçon tubulaire, une patte (91) étant déformée vers l'extérieur du manchon tubulaire (90), ladite patte (91) étant inclinée pour fournir la face découpée destinée à être en contact avec le ressort (50).

7. Dispositif de réglage automatique selon la revendication 6, caractérisé en ce qu'une seconde patte (92) est déformée vers l'extérieur du manchon tubulaire (90), ladite seconde patte (92) s'étendant radialement et fournissant des moyens pour un positionnement axial secondaire du ressort en lame (50).

8. Dispositif de réglage automatique selon l'une quelconque des revendications 2 à 4, caractérisé en ce qu'une patte (111) est agencée sur le second élément (35) formant extrémité (111) en ayant une face radiale située au niveau de l'extrémité éloignée par rapport à l'élément intermédiaire (29), un étrier (50) étant agencé sur le second élément (35) formant extrémité et positionné axialement par rapport à celui-ci, l'étrier (115) définissant une structure (121) formant patte qui est courbée vers l'extérieur à partir du second élément (35) formant extrémité et vers l'élément intermédiaire (29) pour fournir la face transversale découpée destinée à venir en contact avec le ressort (50), la structure (121) formant patte étant positionnée entre l'élément intermédiaire (29) et la structure (111) formant patte, la face radiale et les bords latéraux de la patte (111) servant à positionner le ressort (50) axialement et de manière rotationnelle par rapport au second élément (35) formant extrémité.

9. Dispositif de réglage automatique selon l'une quelconque des revendications 1 à 8, caractérisé en ce qu'un ressort de traction (160) agit entre les premier et second éléments (31, 35) formant extrémités pour rappeler le second élément (35) formant extrémité et l'élément intermédiaire (29) l'un vers l'autre, les premier et second éléments (31, 35) formant extrémités étant retenus pour se déplacer avec les patins de frein (12, 13).

10. Dispositif de réglage automatique selon la revendication 9, caractérisé en ce que des moyens (156) de limitation du déplacement sont agencés entre un des éléments (35) formant extrémités et le patin associé (13).

11. Dispositif de réglage automatique selon la revendication 9 ou 10, caractérisé en ce que l'un des éléments (31) formant extrémités est rappelé en contact avec son patin de frein associé (12) par des moyens (152) formant ressort, lesdits moyens (152) formant ressort appliquant une charge plus grande que le ressort en lame (146).

12. Dispositif de réglage automatique selon l'une quelconque des revendications précédentes, caractérisé en ce qu'un élément (60; 95; 105) sensible à la température est agencé sur l'un dudit second élément (35) formant extrémité ou dudit élément (40; 90) formant manchon, une structure (61; 87; 96; 131) étant prévue sur ledit élément (60; 95; 105) sensible à la température pour venir en contact avec une structure complémentaire (62; 85; 97; 127) située sur ledit autre dudit second élément (35) formant extrémité ou dudit élément (40; 90) formant manchon lorsque la température du frein augmente au-dessus d'une valeur prédéterminée, la prise des structures complémentaires (61, 62; 85, 87; 96, 97; 131, 127) empêchant un déplacement relatif du second élément (35) formant extrémité et de l'élément intermédiaire (29).

13. Dispositif de réglage automatique selon la revendication 12, caractérisé en ce que l'élément (60; 95; 105) sensible à la température est un élément formant lame bimétallique.

14. Dispositif de réglage automatique selon la revendication 12 ou 13, caractérisé en ce que l'élément sensible à la température est fixé sur le second élément (35) formant extrémité.

15. Dispositif de réglage automatique selon l'une quelconque des revendications 12 à 14, caractérisé en ce qu'une ouverture (61) est agencée dans l'élément (60) sensible à la température, et une saillie (62) est agencée sur l'autre du second élément (35) formant extrémité ou de l'élément (40) formant manchon, l'élément (60) sensible à la température étant agencé de telle sorte que dans des conditions normales de fonctionnement il soit libéré de la saillie (62) mais qu'au-dessus de la température de fonctionnement prédéterminée, la saillie (62) s'étende à travers l'ouverture (61) située dans l'élément (60) sensible à la température.

16. Dispositif de réglage automatique selon l'une quelconque des revendications 12 à 14, caractérisé en ce que l'élément (60) sensible à la température s'étend à travers une ouverture (85, 88) située dans une plaque (81) fixée par rapport audit autre du second élément (35) formant extrémité ou de l'élément (40) formant manchon, l'élément (60) sensible à la température ayant une partie (87) munie d'un col correspondant axialement avec la plaque (81) et l'ouverture (85, 88) ayant une partie (85) de largeur réduite de telle sorte qu'à des températures de fonctionnement normales l'élément (60) sensible à la temperature s'étende à travers la partie plus large (88) de l'ouverture (85, 88) alors qu'au-dessus de la température de fonctionnement prédéterminée la partie (87) munie d'un col de l'élément (60) sensible à la température est en prise avec la partie (85) de largeur réduite de l'ouverture (85, 88) pour empêcher un déplacement relatif dudit second élément (35) formant extrémité par rapport à l'élément (40) formant manchon et à l'élément intermédiaire (29).

17. Dispositif de réglage automatique selon l'une quelconque des revendications 12 à 14, caractérisé en ce que l'élément (95) sensible à la température comporte une ouverture (96) qui est en prise avec une saillie (97) située sur ledit autre du second élément (35) formant extrémité ou de l'élément (90) formant manchon, ladite saillie (97) étant étagée axialement, l'élément (95) sensible à la température étant situé radialement par rapport à une partie plus courte (98) s'étendant axialement de la saillie (97) pour des conditions de fonctionnement normales et par rapport à une partie plus longue (99) s'étendant axialement de la saillie (97) lorsque la température de fonctionnement augmente au-dessus de la température prédéterminée.

18. Dispositif de réglage automatique selon la revendication 12 ou 13, caractérisé en ce que le second élément (35) formant extrémité est monté de manière coulissante et rotative par rapport à l'élément intermédiaire par l'intermédiaire d'une structure (37) formant tourillon qui est en prise dans une structure formant douille de l'élément intermédiaire (29), l'extrémité du second élément (35) formant extrémité éloignée par rapport à la structure (37) formant tourillon ayant deux paires de pattes écartées axialement (110, 111), une première patte (110, 111) de chaque paire étant agencée diamétralement par rapport à l'autre, les faces d'extrémité des pattes (110, 111) éloignées par rapport à la structure (37) formant tourillon étant radiales, un élément (115) formant étrier ayant une partie (116) formant base munie d'une paire de bras (117, 118) à peu près perpendiculaires s'étendant sur un côté est situé sur le second élément (35) formant extrémité, le tourillon (37) étant positionné à travers une ouverture située dans la partie (116) formant base, un premier bras (117) de l'étrier (116) s'étend le long du second élément (35) formant extrémité, l'extrémité (120) du bras (117) étant recourbée pour venir en contact avec la face radiale de l'une des pattes (110) pour positionner l'étrier (115) axialement par rapport au second élément (35) formant extrémité, le bras (117) définissant des moyens (127) formant gâchette destinés à venir en prise avec l'élément (105) sensible à la température, l'élément sensible à la température étant fixé sur un élément (90) formant manchon monté de manière rotative sur l'élément intermédiaire (29).

19. Dispositif de réglage automatique selon la revendication 18, dans lequel une paire de structures (125) formant rebords parallèles est agencée axialement vers l'extrémité d'un bras (117), les structures (125) formant rebords ayant des parties (126) s'étendant axialement munies de cavités (127) qui y sont formées, l'élément (105) sensible à la température s'étendant parallèlement au bras (117) et entre les structures (125) formant rebords, une paire de pattes (131) s'étendant latéralement étant agencée sur l'élément (105) sensible à la température pour être en prise avec les cavités (127), lorsque la température du frein augmente au-dessus d'une valeur prédéterminée.

20. Dispositif de réglage automatique selon la revendication 18 ou 19, caractérisé en ce que l'extrémité (121) de l'autre bras (118) est recourbée vers l'extérieur et vers la partie (37) formant tourillon au niveau d'un point situé entre l'élément intermédiaire (29) et les pattes (111), l'extrémité (121) fournissant la face transversale découpée destinée à être en contact avec le ressort (50) et la face radiale et les bords latéraux de la patte (111) servant à positionner le ressort (50) axialement et de manière rotationnelle par rapport au second élément (35) formant extrémité.

21. Dispositif de réglage automatique selon l'une quelconque des revendications 18 à 20, caractérisé en ce que la partie du second élément (35) formant extrémité définissant les pattes (110 et 111) est munie de méplats (112), les pattes (110 et 111) s'étendant circonférentiellement entre les méplats (112).

22. Dispositif de réglage automatique selon la revendication 1, caractérisé en ce que le ressort en lame (145) agit en traction en rapprochant l'élément intermédiaire (29) et le second élément (35) formant extrémité.

23. Dispositif de réglage automatique selon la revendication 22, caractérisé en ce que les premier et second éléments formant extrémités (31, 35) sont retenus pour se déplacer avec les patins de frein (12, 13) avec lesquels ils sont associés.

24. Dispositif de réglage automatique selon la revendication 23, caractérisé en ce que des moyens (156) sont prévus pour permettre un déplacement limité entre un élément (35) formant extrémité et le patin associé (13).

25. Dispositif de réglage automatique selon la revendication 22 ou 23, caractérisé en ce qu'un premier des éléments formant extrémités (31) est rappelé en contact avec son patin de frein associé (12) par des moyens (152) formant ressort, lesdlts moyens (152) formant ressort appliquant une charge plus grande que le ressort en lame (145).

26. Dispositif de réglage automatique selon l'une quelconque des revendications 22 à 25, caractérisé en ce que des moyens (155, 156) sont agencés pour limiter un déplacement coulissant axial du second élément (35) formant extrémité par rapport à l'élément intermédiaire (29).

27. Dispositif de réglage automatique selon la revendication 26, caractérisé en ce qu'une partie (140) formant tourillon située sur l'élément intermédiaire (29) est en prise dans une partie (141) formant douille située sur le second élément (35) formant extrémité, une gorge circonférentielle est agencée sur la partie (140) formant tourillon et un axe (156) est agencé à travers la partie (141) formant douille et est en prise tangentiellement dans la gorge (155), pour limiter le déplacement axial relatif de l'élément intermédiaire (29) et du second élément (35) formant extrémité.

28. Dispositif de réglage automatique selon l'une quelconque des revendications précédentes, caractérisé en ce que la structure (175) formant cliquet est formée de manière séparée de l'élément (170) formant ressort en lame.

29. Dispositif de réglage automatique selon la revendication 28, caractérisé en ce que la structure (175) formant cliquet est pivotante par rapport à l'élément (170) formant ressort en lame et est rappelée en prise avec la structure (42) formant roue à rochet.
